Europäisches Patentamt

European Patent Office

Office européen des brevets

(19)

(11) **EP 1 089 175 B1**

(12) **FASCICULE DE BREVET EUROPEEN**

(45) Date de publication et mention
de la délivrance du brevet:
**21.05.2003   Bulletin 2003/21**

(51) Int Cl.⁷: **G06F 11/10**, G06F 11/16

(21) Numéro de dépôt: **00402644.9**

(22) Date de dépôt: **25.09.2000**

(54) **Système informatique sécurisé**

Gesichertes Rechnersystem

Secured computer system

(84) Etats contractants désignés:
**DE ES FR IT**

(30) Priorité: **28.09.1999   FR 9912055**

(43) Date de publication de la demande:
**04.04.2001   Bulletin 2001/14**

(73) Titulaire: **SIEMENS TRANSPORTATION SYSTEMS
92542 Montrouge (FR)**

(72) Inventeurs:
• **El Fassi, Saîd,
91210 Draveil (FR)**
• **Moreau, Louis
59139 Wattignies (FR)**

(74) Mandataire: **Fort, Jacques
CABINET PLASSERAUD
84, rue d'Amsterdam
75440 Paris Cedex 09 (FR)**

(56) Documents cités:
**EP-A- 0 621 521          GB-A- 2 169 114**

• **"OFFLINE RESIDUE CHECKING FOR A FLOATING-POINT ARITHMETIC UNIT EXECUTINGOVERLAPPED OPERATIONS" IBM TECHNICAL DISCLOSURE BULLETIN,US,IBM CORP. NEW YORK, vol. 30, no. 6, 1 novembre 1987 (1987-11-01), pages 391-392, XP000023332 ISSN: 0018-8689**
• **MAHMOOD A ET AL: "CONCURRENT ERROR DETECTION USING WATCHDOG PROCESSORS - A SURVEY" IEEE TRANSACTIONS ON COMPUTERS,US,IEEE INC. NEW YORK, vol. 37, no. 2, 1 février 1988 (1988-02-01), pages 160-174, XP000648398 ISSN: 0018-9340**

## Description

L'invention concerne les systèmes informatiques sécurisés, conçus de façon à avoir un niveau de sécurité quantifiable (c'est-à-dire un niveau de détection de tout défaut de fonctionnement, qui est démontrable). Elle trouve une application particulièrement importante, bien que non exclusive, dans les installations de conduite automatique ferroviaires où il est essentiel de détecter tout défaut qui risquerait de provoquer un incident.

On connaît diverses techniques de sécurisation de systèmes informatiques. On utilise notamment la redondance, consistant à disposer en parallèle plusieurs organes ayant une probabilité de défaillance commune très faible inférieure à un seuil prédéfini. Une autre solution, qu'on peut qualifier de sécurité intrinsèque, utilise des composants et des sous-ensembles dont le comportement en cas de défaillance est connu et est tel que toute défaillance provoque une configuration de sécurité.

De plus, la société MATRA TRANSPORT INTERNATIONAL a réalisé des systèmes dont la sécurité est obtenue en introduisant, dans l'information numérique à traiter, une redondance telle que la probabilité de défaillance non détectée soit inférieure à un seuil prédéfini.

Cette solution a notamment été mise en oeuvre dans un processeur codé. Chaque information susceptible d'avoir une influence sur la sécurité est codée et un seul mode de codage est adopté sur tout le trajet de l'information au cours de son acquisition, de son traitement et de sa transmission. La sécurité de l'information peut être complétée, si nécessaire, par cryptage.

Le principe du mode de sécurisation par codage, qui est mis en oeuvre par la société MATRA TRANSPORT INTERNATIONAL sous la marque DIGISAFE, est le suivant.

La mise en oeuvre du principe peut s'écarter des détails de réalisation qui seront décrits ensuite pour tenir compte de la technologie utilisée.

Chacune des caractéristiques de chaque information entrante ayant une incidence sur la sécurité est protégée par un code. Les caractéristiques peuvent être notamment :

- une valeur et une identité (et éventuellement une date de limite de validité) ; ou
- une donnée, une adresse et éventuellement une séquence d'apparition.

Le codage ajoute une redondance sur l'information à protéger.

Avec une information numérique utile contenue dans un le champ de $n$ bits, le codage consiste à ajouter $k$ bits de redondance pour former un mot codé sur $m$ bits tel que :

$$m = n + k$$

Il y a donc $2^n$ mots possibles appartenant au code et $(2^{n+k} - 2^n)$ mots possibles qui n'appartiennent pas au code.

La probabilité pour qu'un mot appartenant au code soit pris à la place d'un autre (probabilité de non détection d'erreur) est donc :

$$p = 1 / 2^k$$

La puissance du codage est choisie pour atteindre le niveau de sécurité requis. Ainsi, pour obtenir une probabilité de $10^{-12}$, il faut que $k$ soit supérieur à 40.

Pour que le code soit compatible avec l'ensemble des opérations algorithmiques, on a choisi un code arithmétique tel que toute valeur $x$ soit représentée par :

$$X = A . x$$

où $A$, clé du code, est un nombre premier.

Toutes les opérations arithmétiques conservent donc la propriété que $X$ est multiple de $A$. Les erreurs de calcul sont détectés par la perte de divisibilité par $A$.

L'identité doit être protégée contre une erreur d'adressage qui risque de faire prendre une variable $Y = A . y$ à la place de $X = A . x$ puisque $X$ et $Y$ appartiennent au code. Le codage arithmétique par multiplication n'est pas suffisant pour détecter l'erreur. On écarte la difficulté en associant, à chaque variable $x$, un identificateur entier $B_x$ strictement compris entre 0 et $A$, bornes exclues, $x$ sera alors représenté par :

$$X' = A \cdot x + B_x$$

La protection de la date n'est nécessaire que si une variable évolue en fonction du temps. Si on souhaite garantir la fraîcheur de l'information à chaque cycle de calcul, caractérisé par une date, la date est ajoutée au code de toute information variante. Ainsi x sera représenté par :

$$X'' = A \cdot x \quad + \quad B_x \quad + \quad D$$
$$\text{valeur} \qquad \text{identité} \qquad \text{date}$$

avec

$$B_x + D < A$$

Le contrôle de la validité d'un résultat se fait alors par division entière par A. On extrait éventuellement D du reste $B_x + D$ et on compare la partie $B_x$ avec la valeur attendue ; l'algorithme étant connu, la valeur du reste est prévisible dès la conception.

Le code peut être plus étendu lorsque la protection recherchée est accrue.

Cette architecture présente quelques inconvénients et limitations. Comme elle exige des manipulations de code complexes, elle requiert des calculateurs dédiés et des architectures optimisées, donc fermées. Cependant elle a donné de très bons résultats dans des systèmes mettant en oeuvre des processeurs puissants, mais dont la sécurité interne est véritable a priori. Mais elle se prête mal à l'emploi des microprocesseurs récents qui comportent des mémoires cache (ou ante-mémoires) de données ou de mémoire car leur utilisation nécessiterait une analyse de sécurité spécifique complexe et n'assurant pas une sécurité absolue. De plus, il subsiste des scénarios résiduels du fait de la présence sur le même microprocesseur des informations fonctionnelles et des constantes ou des opérations de codage. Il n'est en conséquence pas possible d'exploiter toute la puissance de ce type de microprocesseur.

Le document GB-A-2169114, auquel on pourra également se reporter, fait connaître un système informatique ayant un processeur et un coprocesseur et traitant des données d'entrée associées à des codes ; ces codes restent associés aux données dans le processeur ce qui alourdit la tâche de ce dernier.

L'invention telle que définie dans la revendication 1 vise à écarter les limitations ci-dessus et pour cela de retirer la charge du traitement numérique de sécurité au processeur en transférant l'ensemble des traitements numériques de sécurité vers un périphérique. Par ailleurs, on connaîtra ainsi parfaitement le niveau de sécurité obtenu.

L'invention propose en conséquence un système informatique comprenant au moins un processeur travaillant sous le contrôle d'un programme, qui peut être permanent ou téléchargé, travaillant sur des données d'entrée associables à un code et fournissant des données de sortie destinées à être transmises ou à être appliquées à des organes de sortie, associables à un code,

caractérisé par un périphérique extérieur au processeur, relié au processeur pour recevoir au moins les codes des données d'entrée, les opérandes et la nature de chaque opération élémentaire effectuée par le processeur ayant une architecture sécuritaire calculant un code à chaque opération élémentaire effectuée par le processeur et vérifiant la bonne exécution de tout ou partie du programme exécuté, tandis que le processeur n'effectue des calculs que sur les valeurs fonctionnelles de données codées.

Dans certains cas, il y aura vérification du code du résultat à chaque opération.

Le terme "opération" doit être interprété comme signifiant une opération arithmétique, mathématique, logique ou de contrôle, et non pas une instruction élémentaire. Cette constitution n'impose aucune contrainte sur les caches de données ou de programme du processeur, puisque le processeur n'effectue que des calculs sur les valeurs fonctionnelles des données codées, et non pas sur les codes.

Le périphérique reçoit toutes les informations nécessaires pour vérifier, à l'issue de chaque opération effectuée dans le système, si le code obtenu est correct et cela par des calculs arithmétiques simples. Dans le cas d'un transfert, il suffit de vérifier que le code est conservé. Dans le cas d'une opération faisant intervenir deux opérandes x et y ayant des codes Cx et Cy, un algorithme f stocké dans le périphérique permettra de déterminer le code Cz correct du résultat. Par exemple, pour une addition :

$$Cz = f(CxX + CyY)$$

Si k est le nombre de bits utile à la représentation des mots du langage et est tel que $2^k > A$, on peut alors écrire A. x sous la forme

$$A \cdot x = 2^k \cdot x - r_k (x)$$

où $r^k (x)$ est le reste de la division de $2^k \cdot x$ par A et on peut écrire une valeur X" :

$$X" = 2^k \cdot x + B_x + D - r_k (x)$$

Cette représentation permet de séparer le code de la valeur non codée :

$$X" = X_k + C_x$$

où :

$X_k = 2^k \cdot x$ représente la valeur non codée de la variable, et
$C_x$ représente la partie codée de la variable.

A partir de cette représentation, le processeur ne manipulera que les instructions ou les données non codées $X_k$. Le périphérique gérera les codes et leurs évolutions avec les fonctions appliquées au codage et qu'il connaît.

A chaque instruction, le processeur transfère l'identifiant (c'est-à-dire le "contenant", les valeurs fonctionnelles constituant un "contenu") des opérandes utilisées (par exemple l'adresse de la variable, qui peut également être conservée dans une "mémoire miroir" du périphérique), l'opération effectuée et la valeur du résultat.

A partir de ces données, le périphérique calcule les évolutions du code.

On peut écrire schématiquement les opérations sous la forme ci-dessous :

Processeur       Périphérique

programme et
données

identifiants et résultats

codes et fonctions
de codage

mise à disposition
d'une donnée représentant
le code de l'ensemble
du programme

Le périphérique peut être local ou distant. Le terme "système" pour la mise en sécurité du calculateur lui-même ou du système informatique auquel il appartient désigne non seulement des organes de traitement de l'information, mais aussi les dispositifs d'entrée et sortie des informations dont le contenu est à sécuriser.

L'architecture proposée supprime les contraintes liées à la sécurité dans le choix du processeur (ou des processeurs) et de son système d'exploitation en temps réel (logiciel). Il n'y a pas de perte de puissance notable de calcul en temps réel du processeur et toute erreur de traitement commise à la suite d'une quelconque défaillance matérielle ou d'une intrusion dans les traitements est détectée.

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :

- les figures 1, 2, 3 sont des schémas montrant l'adaptation de l'invention à divers systèmes ;
- la figure 4 est un schéma montrant une constitution possible du périphérique de sécurité.

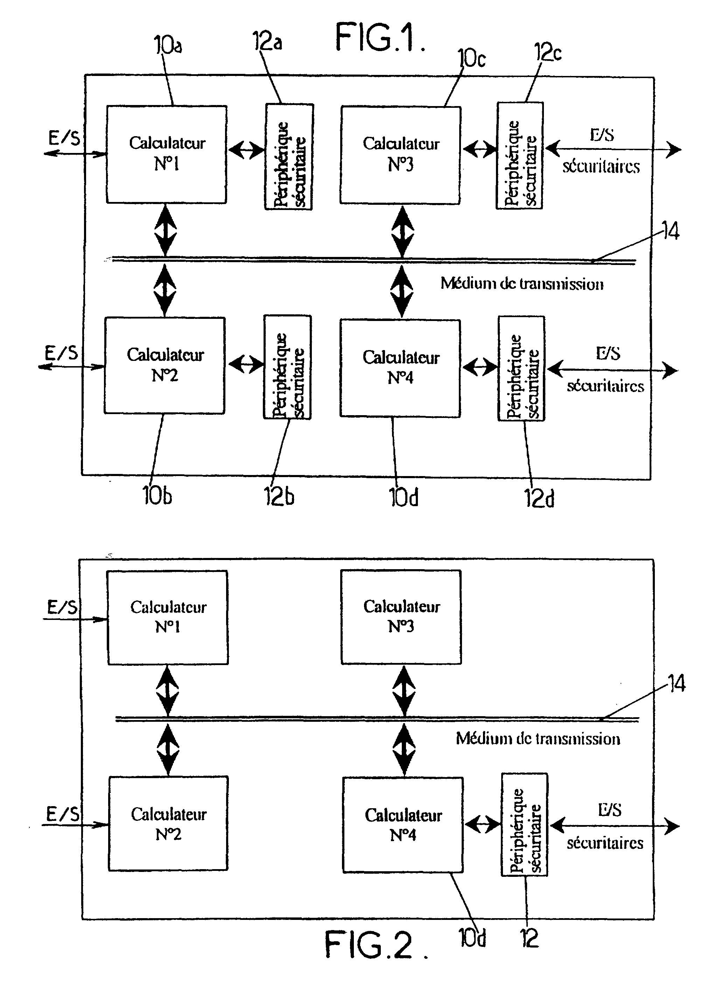

Le système montré en figure 1 comporte plusieurs calculateurs hôtes 10a, 10b, 10c, 10d, reliés par un support de transmission 14, munis chacun d'un périphérique de sécurité 12a, 12b, 12c et 12d. Seuls les périphériques des calculateurs 10c et 10d sont équipés pour la mise en sécurité des Entrées/Sorties E/S. On constate que le système est complètement ouvert.

Dans le mode de réalisation de la figure 2, un seul périphérique 12 implanté sur le calculateur 10d, qui constitue calculateur hôte, assure la sécurité de tout un système à quatre calculateurs (et non pas seulement du calculateur hôte). Ce périphérique peut assurer soit uniquement la sécurité des traitements numériques effectués dans les calculateurs, soit également la mise en sécurité des Entrées/Sorties E/S du calculateur hôte. Il peut aussi être relié directement au support de transmission.

Le calculateur hôte est équipé d'un pilote de sécurité qui lui permet de dialoguer avec le périphérique et les autres calculateurs représentés, eux-mêmes équipés d'un périphérique de sécurité, pouvant être reliés par n'importe quel support de transmission (bus des calculateurs, liaisons série, radio, internet, etc.).

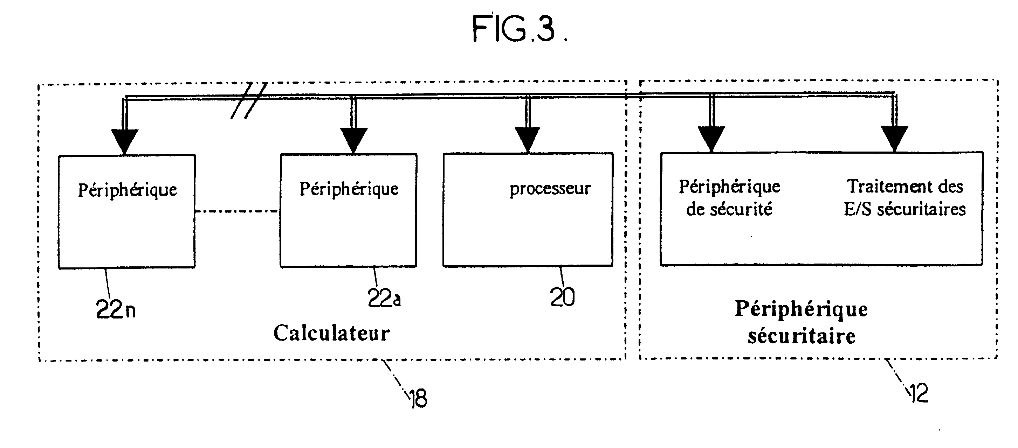

Dans le système de la figure 3, le périphérique de sécurité 12 est relié à un ensemble de calcul classique 18 constitué d'une unité centrale ou d'un processeur 20 et de périphériques classiques 22a, ... 22n. Il comporte un ou deux organes de calcul, dont la sécurité est intrinsèque (c'est-à-dire peut être appréciée a priori) qui effectue à la fois :

- les traitements numériques de sécurité,
- le traitement sécuritaire des entrées-sorties.

En cas de détection d'un dysfonctionnement externe ou interne par le périphérique 12, les messages de validation des sorties sécuritaires ne sont plus émis, et le système auquel appartient le dispositif est mis dans un état particulier, sûr, dépendant des applications.

Dans une variante, le périphérique 12 provoque seulement, en cas de détection d'un dysfonctionnement externe ou interne par le dispositif, la mise du système dans un état particulier, sûr, dépendant des applications.

Il sera souvent avantageux de constituer le périphérique sécuritaire par un ASIC (circuit intégré d'application spécifique) réalisant le traitement des opérations sécuritaires et effectuant leur contrôle. En incluant un dispositif de contrôle dynamique (n'autorisant l'activation de sorties sécuritaires qu'en présence d'un code cohérent, dans la fonctionnalité du périphérique de sécurité, les sorties de sécurité sont inhibées dès l'apparition d'une anomalie dans le code de sécurité.

Un périphérique de sécurité est également utilisable, sous une forme qui sera alors généralement très simple, pour fiabiliser les échanges entre une carte à puce et un ou des calculateurs.

Le périphérique sécuritaire peut être implanté dans la carte elle-même (comme le permet un ASIC) et peut être associé aux calculateurs ou à l'un des calculateurs mis en jeu, pour garantir que les calculs et traitements effectués par la puce de la carte, et/ou par les calculateurs avec lesquels elle dialogue, soient exempts de toute erreur due à une défaillance matérielle inopinée d'un organe du système mis en jeu ou d'une intrusion logicielle ou volontaire.

On décrira maintenant de façon succincte une application de l'invention à des équipements de conduite automatique de véhicules de transport collectif sur voie. Certains au moins de ces équipements doivent être sécuritaires. Les besoins de sécurité peuvent alors être résumés comme suit :

Communication :

Toute erreur sur la partie utile d'une information sécuritaire d'un message série commise entre la sortie d'une application sécuritaire et l'entrée d'une autre application sécuritaire doit entraîner un "hors code" de l'information, c'est-à-dire une incohérence entre la partie utile et la partie redondante de cette information.

Acquisition d'entrées et émission de sorties "tout ou rien" :

"Tout ou rien" définit les entrées ou les sorties caractérisées par l'état 0 ou 1. Une telle entrée sécuritaire restreignant une opération doit entraîner l'élaboration d'une variable d'entrée codée signifiant l'état restrictif ou hors code. Une variable de sortie codée à l'état restrictif ou hors code doit entraîner un état restrictif de la sortie "tout ou rien" correspondante.

Sécurisation des traitements :

Toute erreur d'exécution d'une opération élémentaire entraînant une erreur sur la partie fonctionnelle doit entraîner un "hors code" des variables de sortie concernées par cette opération élémentaire.

Contrôle de fraîcheur :

Chacun des besoins "sécurité" précédents exprime un comportement purement algorithmique, mais les comportements ne sont pas instantanés : ils ont un temps de réponse qui doit être borné en sécurité dans le cas du transport. Pour ce faire, le calculateur peut être rythmé par une horloge sécuritaire qui cadence l'acquisition des entrées, les calculs codés et la commande des sorties. Pour ces trois éléments, la sécurité est basée sur la date. Les messages série (qui ne peuvent pas être datés) utilisent une heure "logique", au niveau du système, du fait de l'asynchronisme des calculateurs entre eux. Sa prise en compte fait partie du décompactage des messages ; pour tenir compte de ce que les informations doivent être récentes, on peut prendre les mesures suivantes :

- Toute dérive de l'horloge cadençant le calculateur au-delà d'un seuil provoque la mise en sécurité du système.
- Tout message inter calculateur jugé trop vieux à la vue de son heure logique est ignoré, ce dernier contrôle étant effectué par le périphérique sécuritaire.

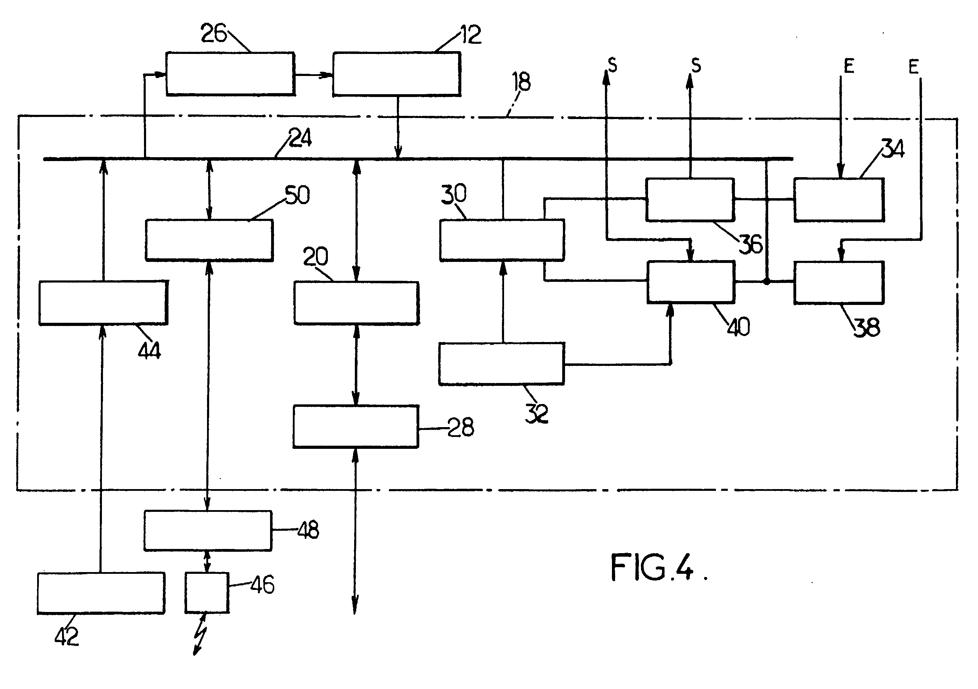

Toutes ces opérations peuvent être effectuées par le périphérique de sécurité 12 dans le système montré en figure 2, qui est un schéma de la partie embarquée sur un véhicule d'un équipement de conduite automatique.
Le système montré en figure 4 comporte un calculateur 18 incorporant un microprocesseur 20 rapide, incorporant une mémoire cache et utilisant un bus standard PCI 24 d'ordinateur personnel. Le périphérique de sécurité 12, qui sera généralement un ASIC permet d'exploiter pleinement les capacités d'un microprocesseur rapide.
Un registre tampon 26 est prévu pour que le périphérique de sécurité 12 puisse exécuter les opérations élémentaires au fur et à mesure de ses possibilités afin d'exploiter pleinement les capacités du microprocesseur.
Pour éviter que le registre 26 ne restitue en permanence un cycle complet ou une partie de cycle qu'il a mémorisé, des moyens non représentés peuvent être prévus pour mettre le système dans un état de sécurité si cet événement est détectable, par exemple par contrôle de la date.
Le microprocesseur 20 constitue l'unité centrale qui assure l'ensemble des fonctions du système. Elle est munie d'une interface série 28 permettant de relier le système à d'autres calculateurs.
Le système comprend encore un contrôleur dynamique constitué d'une partie numérique 30 reliée au bus 24 et d'une partie analogique 32. La partie 34 est interfacée avec l'unité centrale 20 et avec la partie analogique 32 qui assure diverses fonctions :

- fournir la puissance nécessaire à l'alimentation des sorties sécuritaires à partir des séquences élaborées par la partie numérique 30,
- couper en sécurité l'alimentation en cas de séquences incorrectes fournies par la partie 30,
- contrôler la fréquence des séquences d'entrée, c'est-à-dire la fraîcheur des informations.

Les entrées E et sorties S du systèmes sont reliées à la partie analogique 30. Parmi ces entrées et sorties, certaines sont purement fonctionnelles et non sécurisées. La figure 4 montre les interfaces 34 et 36 avec les entrées et sorties fonctionnelles reliées en chaînettes à une première entrée de la partie numérique 30, qui sera généralement constituée par une carte distincte d'une autre carte qui constitue la partie analogique 32. Les interfaces 38 et 40 avec les entrées et sorties sécurisées seront elles aussi groupées en chaînettes, avec éventuellement une liaison avec le bus 24 pour transférer les informations permettant de vérifier la validité des codes introduits par les interfaces.
Le système comporte également des liaisons avec des organes qui fournissent des informations utilisées par la partie numérique du contrôleur dynamique.
Les organes représentés comprennent un capteur de déplacement 42 qui est relié par un interface 44 d'adaptation connecté au bus PCI 24. L'interface élabore les signaux d'alimentation du capteur et transfère les informations reçues du capteur. Ces organes comprennent également un sous-ensemble de communication avec des balises réparties le long de la voie. Ce sous-ensemble comporte une antenne 46 de communication avec les balises, un module analogique 48 de télé-alimentation (s'il s'agit de balises passives), de réception et de démodulation , et un interface 50 de contrôle et de datation.
Au lieu d'être prévu pour effectuer successivement les opérations élémentaires, le périphérique de sécurité peut être adapté à un fonctionnement en mode pipe-line, avec une structure à multiplexage temporel. Il peut aussi comporter des structures parallèles permettant d'effectuer simultanément plusieurs opérations élémentaires.

**Revendications**

1. Système informatique comprenant au moins un calculateur à processeur (10) travaillant sous le contrôle d'un programme, travaillant sur des données d'entrée associables chacune à un code et fournissant des données de sortie associables à un code, destinées à être transmises ou à être appliquées à des organes de sortie, **caractérisé par** au moins un périphérique (12) extérieur au processeur, relié au processeur pour recevoir au moins les codes des données d'entrée, les opérandes et la nature de l'opération de chaque opération élémentaire effectuée par le processeur (10), ayant une architecture sécuritaire calculant un code à chaque opération élémentaire effectuée par le processeur et vérifiant la bonne exécution de tout ou partie du programme exécuté, tandis que le processeur n'effectue des calculs que sur les valeurs fonctionnelles des données codées.

2. Système informatique selon la revendication 1, **caractérisé en ce que** le dit programme est permanent ou téléchargé.

3. Système informatique selon la revendication 1 ou 2, **caractérisé en ce que** le périphérique est unique et est associé à un calculateur hôte (12) pour assurer la sécurité de tout un système à plusieurs calculateurs reliés à un support de communication commun (14).

4. Système informatique selon la revendication 3, **caractérisé en ce que** le calculateur hôte (10d) est équipé d'un pilote de sécurité qui lui permet de dialoguer avec le périphérique et les autres calculateurs.

5. Système informatique selon la revendication 1 ou 2, **caractérisé en ce que** le système comporte plusieurs calculateurs hôte (10a, 10b, 10c, 10d), reliés par un support de transmission (14) et munis chacun d'un périphérique de sécurité (12a, 12b, 12c, 12d).

6. Système informatique selon l'une quelconque des revendications 1 à 4, **caractérisé en ce que** le périphérique de sécurité ou les périphériques de sécurité ne font les opérations de mise en sécurité que sur les entrées/sorties de certains seulement des processeurs.

7. Système informatique selon la revendication 1 ou 2, **caractérisé en ce que** le système comporte un périphérique de sécurité (12) unique, relié à un ensemble de calcul (18) constitué d'une unité centrale ou d'un processeur et de périphériques (22a, ... 22n), le dit périphérique de sécurité ayant un ou des moyens de calcul qui effectuent :

   - les traitements numériques de sécurité,
   - un traitement sécuritaire des entrées/sorties.

8. Système selon l'une quelconque des revendications 1 à 7, **caractérisé en ce que** le dit périphérique de sécurité est prévu pour sécuriser un ensemble du système constitué par une carte à puce, un lecteur et un ou des calculateurs qui interviennent dans le traitement et qui constituent le système et pour fabriquer les échanges entre la carte à puce et le ou les calculateurs.

9. Système selon l'une quelconque des revendications précédentes, dont le périphérique sécuritaire est un circuit intégré d'application spécifique.

**Claims**

1. A computer system comprising at least one computer with a processor (10) operating under the control of a program, processing input data each suitable for being associated with a code and supplying output data each suitable for being associated with a code and for being transmitted or applied to output members, **characterized by** at least one peripheral (12) external to the processor, connected to the processor to receive at least the input data codes, the operands, and the nature of the operation for each elementary operation performed by the processor, the peripheral having secure architecture and computing a code for each elementary operation performed by the processor and verifying proper operation of all or part of the executed program, while the processor performs computations only on the functional values of the encoded data.

2. A computer system according to claim 1, **characterized in that** the said program is permanent or downloaded.

3. A computer system according to claim 1 or 2, **characterized in that** the peripheral is single and associated with a host computer (12)to provide security for all of a system having a plurality of computers connected to a common communications medium (14).

4. A computer system according to claim 3, **characterized in that** the host computer is provided with a safety driver which enables it to dialog with the peripheral and with the other computers.

5. A computer system according to claim 1 or 2, **characterized in that** the system has a plurality of host computers (10a, 10b, 10c, 10 d) interconnected by a communication medium and each provided with a security peripheral (12a, 12b,12c,12d).

6. A computer system according to any one of claims 1-4 , **characterized in that** the security peripheral or the security peripherals perform security operations only on the inputs/outputs of only some of the processors.

7. A computer system according to claim 1 or 2, **characterized in that** the system has a single security peripheral (12), connected to a computation assembly (18) constituted by a central unit or a processor and peripherals (22a,..., 22n), said security peripheral having computation means that perform:

    - digital security processing; and
    - security processing of the inputs/outputs.

8. A system according to any one of claims 1-7, **characterized in that** said security peripheral is designed to make secure an assembly of the system constituted by a smart card, a reader, and one or more computers involved in the processing, and constituting the system, and to generate interchanges between the smart card and the computer(s).

9. A system according to any one of the preceding claims, in which the security peripheral is an ASIC.

**Patentansprüche**

1. Rechnersystem mit wenigstens einem Prozeßrechner (10), der unter der Kontrolle eines Programmes arbeitet, das an Eingangsangaben arbeitet, von dem jedes mit einem Code verbunden ist und Ausgangsangaben liefert, verbunden mit einem Code, dazu bestimmt übertragen zu werden oder den Ausgangsorganen appliziert zu werden,
   **gekennzeichnet durch**
   wenigstens eine äußere Peripherie (12) zum Prozessor, die mit dem Prozessor verbunden ist, um wenigstens die Codes der Eingangsangaben zu empfangen, wobei die Operatoren und die Art der Operationen jedes Elementaroperators, ausgelöst **durch** den Prozessor (10), eine Sicherheitsarchitektur hat, die einen Code an jedem Elementaroperator berechnet, ausgelöst **durch** den Prozessor und die richtige Ausführung insgesamt oder von Teilen des ausgeführten Programmes verifiziert, solange bis der Prozessor nur noch Rechnungen ausführt auf den funktionellen Werten der gegebenen Codes.

2. Rechnersystem nach Anspruch 1,
   **dadurch gekennzeichnet,**
   **daß** das genannte Programm stetig oder down-ladbar ist.

3. Rechnersystem nach Anspruch 1 oder 2,
   **dadurch gekennzeichnet,**
   **daß** eine einzelne Peripherie vorgesehen ist, die mit einem Gastrechner (12) verbunden ist, um die Sicherheit in einem System mehrerer Rechner, die an einem gemeinsamen Kommunikationssupport (14) verbunden sind, insgesamt sicherzustellen.

4. Rechnersystem nach Anspruch 3,
   **dadurch gekennzeichnet,**
   **daß** der Gastrechner (10b) mit einer Sicherheitssteuerung ausgerüstet ist, die es ihm erlaubt, mit der Peripherie und den anderen Rechnern einen Dialog zu führen.

**5.** Rechnersystem nach Anspruch 1 oder 2,
**dadurch gekennzeichnet,**
**daß** das System mehrere Gastrechner (10a,10b,10c,10d) aufweist, die mittels eines Übertragungssupport (14) gelesen werden und von denen jeder mit einer Sicherheitsperipherie (12a,12b,12c,12d) verbunden ist.

**6.** Rechnersystem nach einem der Ansprüche 1 bis 4,
**dadurch gekennzeichnet,**
**daß** die Sicherheitsperipherie oder die Sicherheitsperipherien nur die Sicherheitsoperationen auf den Eingängen/ Ausgängen von bestimmten, einzelnen der Prozessoren ausführen.

**7.** Rechnersystem nach Anspruch 1 oder 2,
**dadurch gekennzeichnet,**
**daß** das System eine einzelne Sicherheitsperipherie (12) aufweist, verbunden mit einem Rechenensemble (18), gebildet aus einer Zentraleinheit oder aus einem Prozessor und Peripherien (22a,.... 22n), wobei diese Sicherheitsperipherien ein oder mehrere Rechnermittel aufweisen, die bewirken:

- die numerische Behandlung der Sicherheit,
- eine Sicherheitsbehandlung der Eingänge/Ausgänge.

**8.** Rechnersystem nach einem der Ansprüche 1 bis 7,
**dadurch gekennzeichnet,**
**daß** die genannte Sicherheitsperipherie vorgesehen ist, um ein Systemensemble zu sichern, gebildet aus einer Steckkarte, einem Leser und einem oder mehreren Rechnern, die an der Behandlung teilnehmen und die das System bilden und zur Herstellung des Austausches zwischen der Steckkarte und dem oder den Rechner/n.

**9.** Rechnersystem nach einem der vorangehenden Ansprüche, bei dem die Sicherheitsperipherie einen integrierten Schaltkreis der spezifischen Applikation darstellt.

## FIG.1.

## FIG.2.

# FIG.3.

**Calculateur**

- Périphérique — 22n
- Périphérique — 22a
- processeur — 20

**Périphérique sécuritaire**

- Périphérique de sécurité
- Traitement des E/S sécuritaires

18

12

EP 1 089 175 B1

FIG.4 .

EP 1 089 175 B1